# EUROPEAN PATENT APPLICATION

(11) **EP 3 352 357 A1**
(43) Date of publication of application: **25.07.2018**
(21) Application number: 17197726.7
(22) Date of filing: 23.10.2017
(51) Int. Cl.: H02M 1/32, H02M 7/483

(54) **FAULT PROTECTION METHOD AND DEVICE FOR SUB-MODULES OF MODULAR MULTILEVEL CONVERTER**

(30) Priority: 23.01.2017 CN 201710051209
(71) Applicant: XJ Group Corporation, Xuchang City Henan (CN); State Grid Zhejiang Electric Power Company, Zhejiang 310007 (CN); XJ Electric Co., Ltd, Xuchang, Henan 461000 (CN); State Grid Corporation of China, Beijing 100031 (CN)
(72) Inventor: FAN, Caiyun, Xuchang City, Henan (CN); YAO, Zhao, Xuchang City, Henan (CN); HAN, Kun, Xuchang City, Henan (CN); HONG, Bo, Xuchang City, Henan (CN); XIA, Kepeng, Xuchang City, Henan (CN); LI, Shenglin, Xuchang City, Henan (CN); ZHANG, Zhigang, Xuchang City, Henan (CN); LIU, Lulu, Xuchang City, Henan (CN)
(74) Representative: Gevers Patents

(57) **Abstract**

A failure protection method and device for sub-modules of a Modular Multilevel Converter (MMC) are provided. When any failure to a sub-module is detected, the sub-module is blocked, and a bypass switch is turned on. In such a manner, a valve control system is not required to transmit a protection instruction when the sub-module fails, and the corresponding sub-module is protected by itself. Therefore, it is possible to avoid occurrence of the condition that the sub-module is seriously damaged if the valve control system fails or a communication optical fiber between the valve control system and the sub-module is damaged.

## Description

### TECHNICAL FIELD

The present application belongs to the technical field of high-voltage direct current power transmission, and particularly to a failure protection method and device for sub-modules of a Modular Multilevel Converter (MMC).

### BACKGROUND

In a running process of a flexible direct current power transmission project, a failure detection and processing process for sub-modules of a Modular Multilevel Converter (MMC) is almost as follows: when it is detected that a sub-module fails, failure information is uploaded to a valve control system, the valve control system transmits a processing command, namely transmitting an instruction for blocking an Insulated Gate Bipolar Transistor (IGBT) and for turning on a bypass switch, to the corresponding sub-module after receiving the failure information. Then the sub-module is blocked, and the bypass switch is turned on, so that the failing sub-module is disconnected from the system. However, if the valve control system fails, or a communication optical fiber between the valve control system and the sub-module is damaged, no processing instruction may be transmitted to the corresponding failing sub-module, which may cause damage to a large number of sub-modules.

### SUMMARY

The disclosure is intended to provide a failure protection method and device for sub-modules of a Modular Multilevel Converter (MMC), which are adopted to solve the problem that a valve control system may not transmit any processing instruction to a corresponding failing sub-module when the valve control system fails or a communication optical fiber between the valve control system and the sub-module is damaged.

In order to solve the technical problem, the technical solutions of the disclosure are as follows.

The disclosure provides a failure protection method for sub-modules of an MMC, which may include that: detecting whether a failure occurs to a sub-module; if the failure occurs, blocking the sub-module, and turning on a bypass switch.

In an embodiment, detecting whether the failure occurs to the sub-module may include: when charging is started, detecting whether an overvoltage failure occurs to the sub-module.

In an embodiment, detecting whether the failure occurs to the sub-module may include: under a condition that a system runs normally, detecting whether any functional failure occurs to the sub-module, the functional failure including the overvoltage failure, an undervoltage failure, a drive failure, a power supply failure, a communication failure, a bypass switch misoperation failure and an open loop switch refusal-operation failure.

In an embodiment, detecting whether the failure occurs to the sub-module may include: when a system enters a halt stage, detecting whether an overvoltage failure occurs to the sub-module.

The disclosure further provides a failure protection device for sub-modules of an MMC, which may include a module configured to: detect whether a failure occurs to a sub-module; if the failure occurs, block the sub-module and turn on a bypass switch.

In an embodiment, the module is configured to, when charging is started, detect whether an overvoltage failure occurs to the sub-module.

In an embodiment, the module is configured to, under a condition that a system runs normally, detect whether any functional failure occurs to the sub-module, the functional failure including the overvoltage failure, an undervoltage failure, a drive failure, a power supply failure, a communication failure, a bypass switch misoperation failure and an open loop switch refusal-operation failure.

In an embodiment, the module is configured to, when a system enters a halt stage, detect whether an overvoltage failure occurs to the sub-module.

The disclosure has the following beneficial effects.

For the sub-module in an MMC, in a running process of the whole system, when any failure is detected, a switching device in the sub-module is blocked, and the bypass switch is turned on, so that a valve control system is not required to transmit a protection instruction when the sub-module fails, and the corresponding sub-module is protected by the sub-module itself. Therefore, it is possible to avoid occurrence of the condition that the sub-module is seriously damaged if the valve control system fails or a communication optical fiber between the valve control system and the sub-module is damaged. The method and device according to embodiments of the disclosure are safe, reliable and easy to operate, and moreover, influence on the valve control system and other modules may be eliminated.

### BRIEF DESCRIPTION OF DRAWINGS

Fig. 1 is a schematic diagram of a sub-module of a Modular Multilevel Converter (MMC) according to an embodiment of the disclosure.
Fig. 2 is a logical flowchart of failure detection and protection.

### DETAILED DESCRIPTION

In order to make the purposes, technical solutions and advantages of the disclosure clearer, the disclosure will be further described below in detail in combination with the drawings and embodiments, which will not form limits to embodiments of the disclosure.

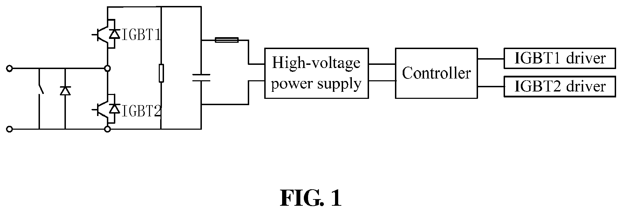

Fig. 1 shows a half-bridge sub-module, which includes a DC-link capacitor, an upper IGBT and a lower IGBT, wherein a bypass thyristor IGBT and a high-speed bypass switch are connected in parallel at a port, a high-voltage power supply is connected in parallel with two ends of the DC-link capacitor of the sub-module, the high-voltage power supply is connected with a controller, and the controller is connected with a first driver and a second driver.

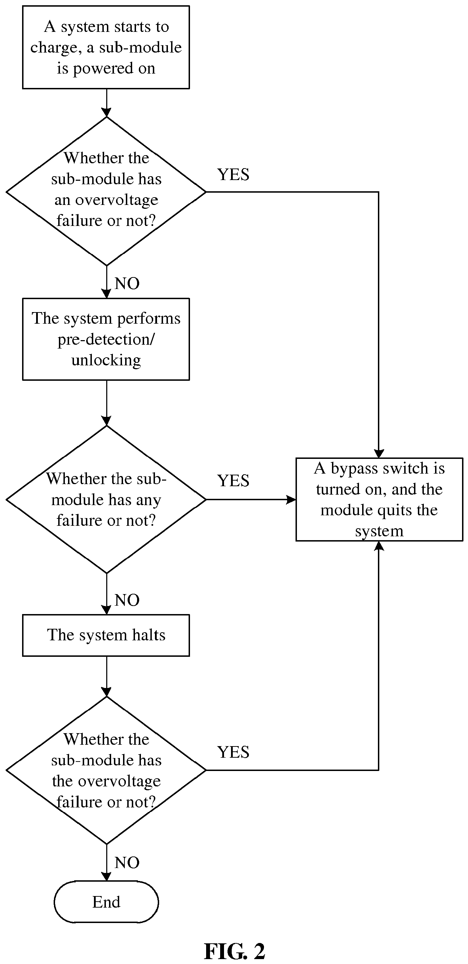

As shown in Fig. 2, when a Voltage Source Converter (VSC) based HVDC system enters a charging stage and a normal running condition is not met, a detection device starts detecting whether there exists an overvoltage failure or not immediately after the sub-module is powered on, and if the failure occurs, the controller immediately blocks switching devices (i.e., the upper and lower IGBTs) in the corresponding sub-module, and turns on the corresponding high-speed bypass switch; otherwise the system can be charged normally.

When the system runs normally, all functional failure conditions are detected, for example: the overvoltage failure, an undervoltage failure, a drive failure, a power supply failure, a communication failure between a valve control system and the sub-module, a bypass switch misoperation failure and a bypass switch refusal-operation failure, and if any failure occurs, the controller immediately blocks the switching device in the corresponding sub-module, and turns on the corresponding high-speed bypass switch; otherwise the system can run normally.

When the system enters a halt stage, it is detected whether the corresponding sub-module has the overvoltage failure or not, and if the failure occurs, the controller immediately blocks the switching device in the corresponding sub-module, and turns on the corresponding high-speed bypass switch.

According to the disclosure, the sub-module is detected in each stage of the system, for example, the sub-module is started to be detected in a charging process, so that it is possible to effectively avoid occurrence of the condition that the sub-module is damaged by an excessively high voltage of the sub-module when the system does not run normally; under the condition that the system runs normally, comprehensive failure detection is still performed on the sub-module, and all element abnormity conditions can be detected; and moreover, in a halt state of the system, whether the sub-module has the overvoltage failure or not is still detected, so that it is possible to avoid occurrence of the condition that the sub-module is probably damaged by an individual excessively high voltage caused by non-uniform voltage distribution of sub-modules.

On the whole, in the whole running stage of the system, whether the sub-module fails or not is detected, if the failure occurs, failure information is not required to be transmitted to the valve control system, it is only necessary to transmit the failure information to its own controller, and the controller controls the bypass switch to be turned on, so that it is possible to effectively avoid occurrence of the condition that the sub-module cannot be protected and is seriously damaged under a failure condition due to the fact that the valve control system fails or a communication optical fiber between the valve control system and the sub-module is damaged and a transmitted control instruction cannot reach the sub-module.

In addition, the disclosure further provides a failure protection device for sub-modules of a Modular Multilevel Converter (MMC), which includes a module configured to: detect whether a failure occurs to a sub-module; if the failure occurs, block the sub-module and turn on a bypass switch.

The device is actually a computer-implemented solution based on a corresponding method of the disclosure, i.e. a software architecture, and the module is a processing process or program corresponding to the method. Since the method has been introduced clearly and completely, the device will not be described in detail.

## Claims

1. A failure protection method for sub-modules of a Modular Multilevel Converter, MMC, **characterized in that**, the method comprises: detecting whether a failure occurs to a sub-module; if the failure occurs, blocking the sub-module, and turning on a bypass switch.

2. The failure protection method for sub-modules of an MMC according to claim 1, wherein detecting whether the failure occurs to the sub-module comprises: when charging is started, detecting whether an overvoltage failure occurs to the sub-module.

3. The failure protection method for sub-modules of an MMC according to claim 1, wherein detecting whether the failure occurs to the sub-module comprises: under a condition that a Voltage Source Converter, VSC, based HVDC system runs normally, detecting whether any functional failure occurs to the sub-module, the functional failure comprising the overvoltage failure, an undervoltage failure, a drive failure, a power supply failure, a communication failure, a bypass switch misoperation failure and an open loop switch refusal-operation failure.

4. The failure protection method for sub-modules of an MMC according to claim 1, wherein detecting whether the failure occurs to the sub-module comprises: when a system enters a halt stage, detecting whether an overvoltage failure occurs to the sub-module,.

5. A failure protection device for sub-modules of a Modular Multilevel Converter, MMC, **characterized in that**, the device comprises a module configured to: detect whether a failure occurs to a sub-module; and if the failure occurs, block the sub-module and turn on a bypass switch.

6. The failure protection device for sub-modules of an MMC according to claim 5, wherein the module is configured to, when charging is started, detect whether an overvoltage failure occurs to the sub-module.

7. The failure protection device for sub-modules of an MMC according to claim 5, wherein the module is configured to, under a condition that a system runs normally, detect whether any functional failure occurs to the sub-module, the functional failure comprising the overvoltage failure, an undervoltage failure, a drive failure, a power supply failure, a communication failure, a bypass switch misoperation failure and an open loop switch refusal-operation failure.

8. The failure protection device for sub-modules of an MMC according to claim 5, wherein the module is configured to, when a system enters a halt stage, detect whether an overvoltage failure occurs to the sub-module.
